# EUROPÄISCHE PATENTSCHRIFT

(11) **EP 1 519 846 B1**
(45) Veröffentlichungstag und Bekanntmachung des Hinweises auf die Patenterteilung: **17.05.2006**
(21) Anmeldenummer: 03762463.2
(22) Anmeldetag: 09.07.2003
(51) Int. Cl.: B60G 21/055

(54) **STABILISATOR FÜR KRAFTFAHRZEUGE**
ANTI-ROLL BAR FOR MOTOR VEHICLES
BARRE ANTIROULIS POUR AUTOMOBILES

(30) Priorität: 09.07.2002 DE 10231013
(43) Veröffentlichungstag der Anmeldung: 06.04.2005
(73) Patentinhaber: ZF Lemförder Metallwaren AG, 49448 Lemförde (DE)
(72) Erfinder: BUDDE, Frank, 49401 Damme (DE); WOLF, Georg, 49080 Osnabrück (DE)
(86) Internationale Anmeldenummer: PCT/DE2003/002295
(87) Internationale Veröffentlichungsnummer: WO 2004/005056

(56) Entgegenhaltungen:
- EP-A- 0 160 588
- EP-A- 0 246 416
- EP-A- 0 391 222
- EP-A- 0 647 537
- DE-A- 3 612 777
- DE-A- 19 930 444
- GB-A- 2 069 945
- JP-A- 11 020 450
- US-A- 4 234 205
- US-A- 4 763 922
- US-A- 5 836 712
- US-B1- 6 308 972
- US-B1- 6 318 710

## Beschreibung

Die vorliegende Erfindung betrifft einen Stabilisator gemäß dem Merkmal des Oberbegriffs des Anspruchs 1. Solche Stabilisatoren werdden von DE-A-19930444 und US-A-4763922 offenbart.

Stabilisatoren dienen im Kraftfahrzeugbereich der Verringerung der Rollneigung des Fahrzeuges durch Verringerung der Radlastdifferenzen zwischen äußeren und inneren Rädern, die durch einseitiges Einfedern beim Durchfahren von Kurven entstehen. Bei Kurvenfahrten federt das kurveninnere Rad aus. Dadurch wird der Stabilisator in sich verwunden. Mit der so entstehenden Federkraft wird nun die kurvenäußere Radaufhängung unterstützt, so dass die Neigung des Fahrzeugs wesentlich verringert wird. Stabilisatoren werden über Pendelstützen, Kugelgelenke und zylindrische Drehlager am Fahrwerk und an der Karosserie befestigt. Sie zeichnen sich in der Regel durch hohe dynamische Belastbarkeit bei gleichzeitiger Korrosionsfestigkeit aus.

Stabilisatoren aus dem PKW-Bereich sind heutzutage einteilig ausgeführt und meist als mehrfach durch Kaltumformung gebogener Rundstab aus Federstahl gefertigt. Auch einteilige Stabilisatoren aus geschweißten Rohren kommen zum Einsatz. Stabilisatoren aus Stahl weisen nachteilig ein hohes Gewicht auf. Aufgrund ihrer komplexen Geometrie ist ein sehr hoher Umformgrad zur Fertigung erforderlich. Nach dem Umformen ist es notwendig, einen Korrosionsschutz auf den Stabilisator aufzubringen.

Aufgabe der vorliegenden Erfindung ist es, einen Stabilisator bereitzustellen, der kostengünstig bei gleichzeitiger Gewichtsersparnis herstellbar ist und sich dabei an den zur Verfügung stehenden Bauraum flexibel anpassen lässt.

Diese Aufgabe wird erfindungsgemäß durch einen Stabilisator mit den Merkmalen des Anspruchs 1 gelöst. Vorteilhafte Weiterbildungen des Stabilisators ergeben sich durch die Merkmale der Unteransprüche.

Der erfindungsgemäße Stabilisator ist aus Zwischenteilen, aus Verbindungsmitteln sowie aus Endteilen zusammengesetzt. Verbindungsmittel, Endteile und Zwischenteile bilden vorteilhaft ein flexibles Baukastensystem, mit dem entsprechend der räumlichen Begebenheiten und der Belastungsart funktionelle Leichtbau-Stabilisatoren montiert werden können. Die Zwischenteile sind aus Kunststoff gefertigt. Dadurch wird vorteilhaft eine Gewichtsreduktion gegenüber den herkömmlichen Stabilisatoren aus Federstahl erreicht. Die Länge der stabförmigen Zwischenteile kann leicht variiert werden und an die durch den verfügbaren Bauraum bestimmte Geometrie angepasst werden, da die Zwischenteile als Strangpressprofil bzw. Extrusionsprofil leicht mittels geeigneter Werkzeuge, wie z.B. einer Säge, auf die gewünschte Länge gebracht werden können. Zur Aufnahme großer Biege- und Torsionsmomente können die Zwischenteile zum einen belastungsspezifisch durch einen Metallkern verstärkt sein. Dadurch, dass der Metallkern vollständig vom Kunststoff ummantelt wird, ist ein Korrosionsschutz nicht mehr zwingend vorzusehen. Eine weitere Möglichkeit zur Verstärkung des Stabilisators an den Hauptbeanspruchungszonen ist das Einsetzen von Zwischenteilen, die im Hohlkörperblasformen hergestellt werden. Diese Zwischenteile weisen vorteilhaft eine Bauchung auf, die es ermöglicht, größere Belastungen aufzunehmen und entsprechend weiterzuleiten.

Eine weitere Ausführung des Stabilisators weist eine Kombination aus Zwischenteilen aus Kunststoff und Zwischenteilen aus Metall auf. Auch die Verbindungsstücke können als Kombination aus Kunststoff und Metall ausgebildet sein. So wird der Stabilisator entsprechend der örtlich unterschiedlich ausgebildeten Belastungsarten und Belastungsstärken flexibel zusammengesetzt. Beide Formen von Zwischenteilen weisen an ihren Enden vorteilhaft parallele Nuten bzw. Rücksprünge auf, die mit Vorsprüngen eines Verbindungsmittels bzw. Endteils aus Metall oder Kunststoff als Rast- oder Schnappverbindung zusammenwirken. Durch diese Rast-oder Schnappsysteme wird die Montage des Stabilisators sehr einfach, da die Verbindungsmittel leicht und ohne Werkzeuge in oder auf die Stirnseite der Zwischenteile ein- bzw. aufschiebbar sind und so nach dem Einrasten gegen ungewolltes Verlieren gesichert sind. Werden nun die Verbindungsmittel in die Zwischenteile eingesetzt, so können sie bei entsprechender Ausgestaltung, insbesondere kreisförmiger Ausgestaltung, frei um die Längsachse der Zwischenteile verdreht werden. Hierdurch wird vorteilhaft die große Anpassungsfähigkeit an den zur Verfügung stehenden Bauraum noch erweitert. Sind die Verbindungsmittel mit den Zwischenteilen in die gewünschte Position gebracht, so werden sie fest miteinander verbunden, insbesondere verschweißt oder verklebt. Die Verbindungsmittel werden so gefertigt, dass sie je nach Bedarf mit ihren freien Enden einen Winkel zwischen 0° und 90° aufspannen. Andere Winkel sind selbstverständlich ebenso möglich. Auch die Verbindungsmittel können vorteilhaft entsprechend der Belastung verstärkt oder unverstärkt, massiv oder hohl ausgeführt sein. Zur Realisierung bestimmter Stabilisatorausführungen kann es vorteilhaft sein, s-förmige Verbindungsmittel einzusetzen, durch die die Anzahl der zu montierenden Teile reduziert wird. Es besteht die Möglichkeit, Zwischenteile und Verbindungsmittel vorteilhaft aus dem gleichen Kunststoff herzustellen, so dass ein eventuelles Recycling vereinfacht wird. Eine aufwendige Trennung von Zwischenteilen und Verbindungsmitteln ist bei Verwendung gleichartiger Kunststoffe nicht mehr notwendig.

Nachfolgend werden einige mögliche Ausführungsformen des erfindungsgemäßen Stabilisators anhand von Zeichnungen näher erläutert. Es zeigen:
- Figur 1:: Aus Strangpressprofilen montierter Stabilisator mit gewinkelten Verbindungsmitteln;
- Figur 2:: aus Strangpressprofilen montierter Stabilisator mit s-förmigen Verbindungsmitteln;
- Figur 3:: aus mit dem Hohlkörperblasverfahren hergestellten Zwischenteilen montierter Stabilisator mit gewinkelten Verbindungsmitteln;
- Figur 4:: in einem 90°-Winkel gebogenes, in ein Zwischenteil eingesetztes, mit einem Metallkern verstärktes Verbindungsmittel;
- Figur 5:: in einem 15°-Winkel gebogenes, mit einem gezackten Metallkern verstärktes Verbindungsmittel;
- Figur 6:: in einem 30°-Winkel gebogenes, mit einem Metallkern mit Hinterschneidung verstärktes Verbindungsmittel;
- Figur 7:: in einem 45°-Winkel gebogenes, hohles Verbindungsmittel;
- Figur 8:: in einem 60°-Winkel gebogenes, mit einem Metallrohr verstärktes Verbindungsmittel;
- Figur 9:: s-förmiges mit einem Metallkern verstärktes Verbindungsmittel;
- Figur 10:: ein rundes, in ein Zwischenteil eingepresstes Verbindungsmittel;
- Figur 11:: alternative Ausführungsformen der Querschnitte von Verbindungsmitteln und Zwischenteilen;
- Figur 12:: Ausführungsbeispiel für ein Endteil;

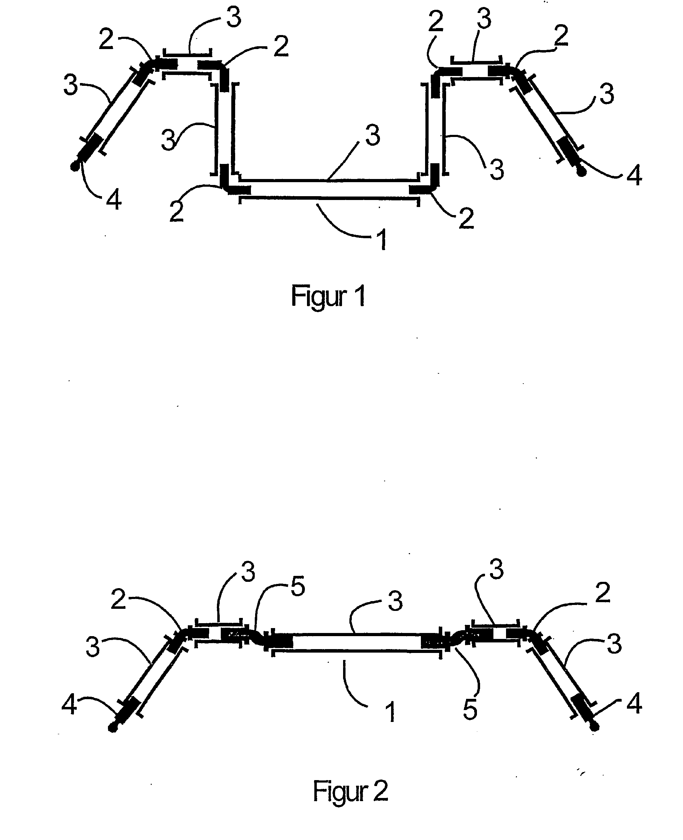

Figur 1 zeigt eine erste mögliche Ausgestaltung des mittels Baukastensystem zusammengesetzten Stabilisators 1. Er ist aus Verbindungsmitteln 2 mit unterschiedlichen Winkelneigungen, im Strangpressverfahren hergestellten Zwischenteilen 3 und zwei Endteilen 4 zusammengesetzt. Sowohl Verbindungsmittel 2 als auch Zwischenteile 3 bestehen größtenteils bzw. vollständig aus Kunststoff. Die an beiden Enden des Stabilisators 1 montierten Endteile 4 dienen der Befestigung des Stabilisators 1 an Pendelstützen, Kugelgelenken oder an zylindrischen Drehlagern.

In Figur 2 ist der Rücksprung des Stabilisators 1 im Bereich der Biege- bzw. Torsionsbelastung durch jeweils ein s-förmiges Verbindungsmittel 5 an jeder Seite des entsprechenden Zwischenteils 3 realisiert.

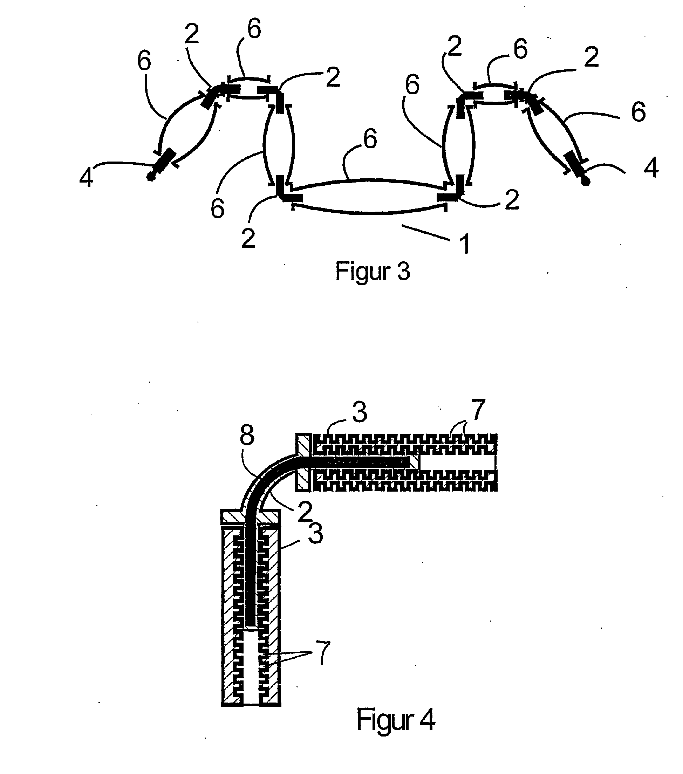

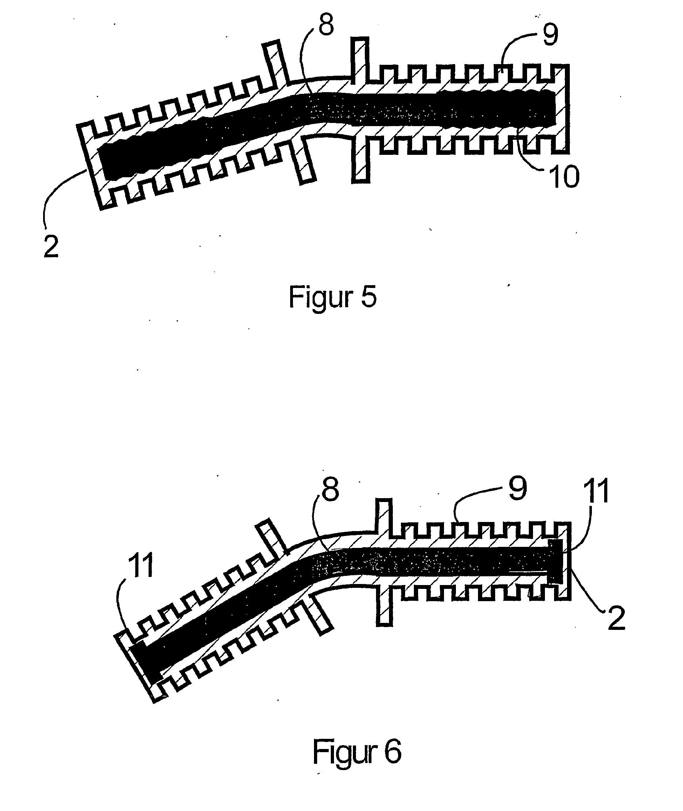

Figur 3 zeigt einen Stabilisator 1, bei dem die Zwischenteile 6 durch Hohlkörperblasformen hergestellt sind. Diese Ausformung ermöglicht es, wesentlich größere Flächenträgheitsmomente zu erzeugen und so die auftretenden Belastungen einfacher aufzunehmen. Auch eine Kombination aus im Strangpressverfahren hergestellten Zwischenteilen 3 und Zwischenteilen 6, die mittels des Hohlkörperblasformverfahrens hergestellt werden, ist möglich. Dadurch ist die Gestaltungsfreiheit sehr groß. Bei eingeschränktem Bauraum kann individuell ein bestimmtes Profil mit dem Hohlkörperblasformen hergestellt werden, so dass sich das Profil des Stabilisators an den zur Verfügung stehenden Bauraum anpassen kann, ohne dass Einschränkungen bezüglich der Biege- und Torsionsfestigkeit in Kauf genommen werden müssen. Die im Strangpressverfahren hergestellten Zwischenteile 3 können je nach Bedarf sowohl massiv als auch hohl ausgeführt sein. Sämtliche Zwischenteile 3 können innen und/oder außen parallele Nuten bzw. Rücksprünge 7 aufweisen (Figur 4). Entsprechend der Geometrie der Rücksprünge der Zwischenteile 3 ist die Geometrie des in Figur 4 beispielhaft mit einem 90°-Winkel und einem verstärkenden Metallkern 8 ausgeführten Verbindungsmittel 2 ausgebildet. Das Verbindungsmittel 2 weist Vorsprünge 9 (siehe Figuren 5 und 6) auf, die mit den Rücksprüngen 7 der Zwischenteile 3 zusammenwirken. Das Verbindungsmittel 2 wird in die Zwischenteile 3 eingesetzt bzw. auf die Zwischenteile 3 aufgeschoben, so dass die Vorsprünge 9 des Verbindungsmittels 2 in die Rücksprünge 7 der Zwischenteile 3 einrasten. So sind die Verbindungsmittel 2 zwar in Richtung der Längsachse fixiert, lassen sich jedoch immer noch um die Längsachse der Zwischenteile 3 frei verdrehen. Nach Erreichen der gewünschten Position werden Zwischenteile 3 und Verbindungsmittel 2 z. B. mittels Schweißen oder Kleben stoffschlüssig miteinander verbunden. Figur 5 zeigt ein Verbindungsmittel 2, dass mit einem Metallkern 8 verstärkt ist, der zur Verhinderung eines eventuell bei Belastung auftretenden Abgleiten des Kunststoffs vom Metallkern 8 mit einer gezackten Struktur 10 an den Endbereichen versehen ist.

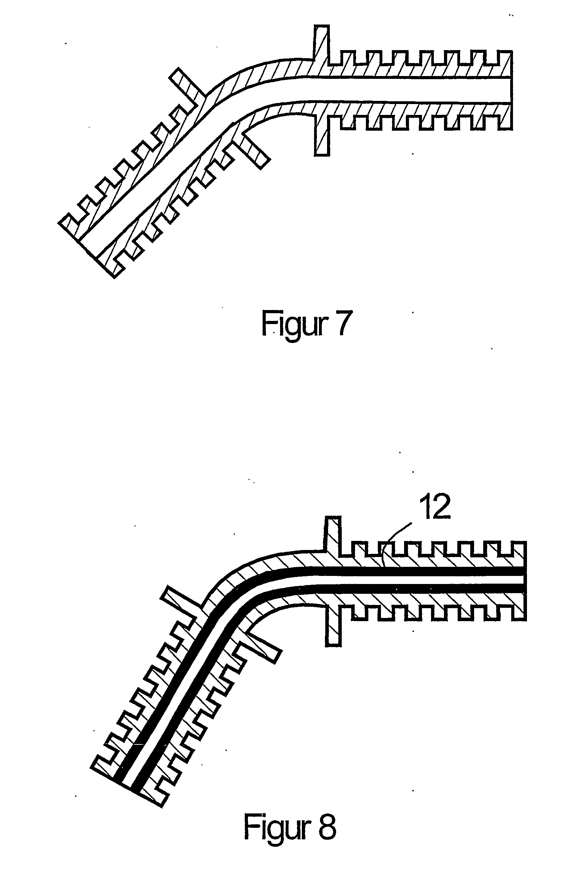

Eine weitere Möglichkeit zur Vermeidung des Abgleitens des Kunststoffes zeigt Figur 6. Der zur Verstärkung des Verbindungsmittels 2 eingesetzte Metallkern 8 weist entsprechende Hinterschneidungen 11 auf, die ein Abgleiten wirkungsvoll vermeiden. Zur Reduktion des Gewichtes können die Verbindungsmittel 2 auch hohl ausgeführt sein (Figur 7). Um auch bei dieser Ausführungsform einem Versagen infolge von Biege- oder Torsionsbeanspruchung vorzubeugen, kann in das Hohlprofil ein Metallrohr 12 eingesetzt werden (Figur 8). Ein Abgleiten des Kunststoffes bei niedrigen Neigungswinkeln kann z.B. durch Einsatz von PUR-Lack (Polyurethan) zur Haftungsverstärkung verhindert werden.

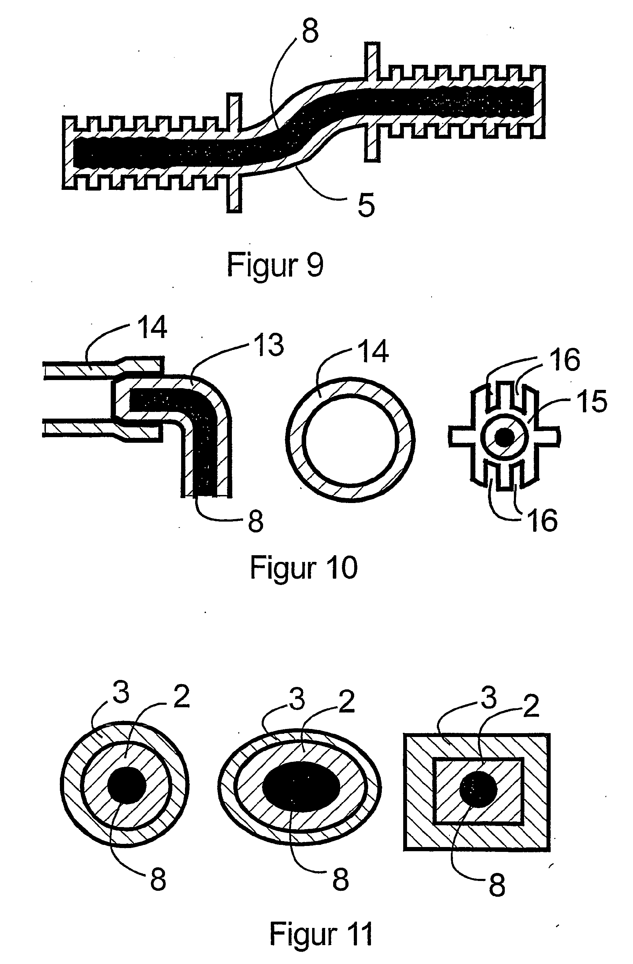

Figur 9 zeigt eine mögliche Ausführungsform eines s-förmigen Verbindungsmittels 5, welches abhängig von Geometrie und Belastungsart zum Einsatz kommen kann. In Figur 10 ist ein rundes Verbindungsmittel 13 in das Zwischenteil 14 eingepresst. Nach dem Einsetzen wird das Verbindungsmittel 13 mit dem Zwischenteil 14 verklebt oder vorzugsweise verschweißt. Den beim Einpressen entstehenden Spannungen im Kunststoff kann durch Einsatz eines Verbindungsmittels 15, dessen Querschnittsfläche Aussparungen 16 aufweist, entgegengewirkt werden. Beim anschließenden Verschweißen kann die Kunststoffschmelze in die freien Bereiche des Verbindungsmittels 15 abfließen. Der beim Einpressen überschüssige Werkstoff, der die Spannungen hervorruft, wird so abgeführt. Alternativ kann der Querschnitt von Verbindungsmitteln 2 und Zwischenteilen 3 auch oval, rechteckig oder hier nicht dargestellt polygonförmig ausgeführt sein, um eine zusätzliche Sicherung gegen Verdrehen zu erreichen (Figur 11). Die endgültige Geometrie des gesamten Stabilisators 1 muss dabei schon bei der Fertigung der Zwischenteile 3 und der Verbindungsmittel 2 berücksichtigt werden, da ein nachträgliches Verdrehen durch die Querschnittsgeometrie unterbunden wird.

Eine weitere nicht dargestellte Ausführungsform zeichnet sich durch den Einsatz eines im Bereich der Rast- bzw. Schnappelemente gebogenen Verbindungsstückes 2 in ein entsprechend gebogenes Zwischenteil 3 aus. Auch hier ist eine Sicherung gegen Verdrehen durch die Krümmung der Bauteile nach dem Einsetzten gewährleistet.

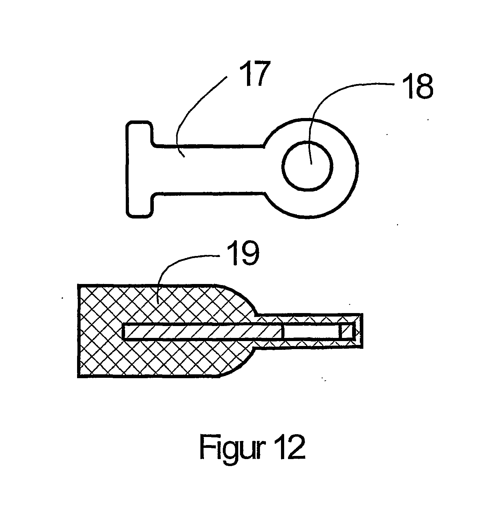

Figur 12 zeigt ein Ausführungsbeispiel für ein Endteil 4 des Stabilisators 1. Ein einfaches Endblech 17 ist zur Montage des Stabilisators z.B. mit einer Pendelstütze mit einer kreisförmigen Aussparung 18 versehen. Nachdem das Blech mit einem Kunststoff 19 entsprechend ummantelt ist, wird es in ein Zwischenteil 3 eingesetzt bzw. eingepresst.

### Bezugszeichenliste

- 1:: Stabilisator
- 2:: Verbindungsmittel
- 3:: Zwischenteil, Strangpressverfahren
- 4:: Endteil
- 5:: Verbindungsmittel, s-förmig
- 6:: Zwischenteil, Hohlkörperblasformen
- 7:: Rücksprunge bzw. Nuten des Zwischenteils
- 8:: Metallkern
- 9:: Vorsprünge Verbindungsmittel
- 10:: Verzahnungen des Metallkerns
- 11:: Hinterschneidungen des Metallkerns
- 12:: Metallrohr
- 13:: Verbindungsmittel, rund
- 14:: Zwischenteil glatt
- 15:: Verbindungsmittel mit Aussparungen
- 16:: Aussparungen des Verbindungsmittels
- 17:: Endblech
- 18:: kreisförmige Aussparung im Endblech
- 19:: ummantelnder Kunststoff

## Patentansprüche

1. Stabilisator für ein Kraftfahrzeug, **dadurch gekennzeichnet, dass** der Stabilisator (1) aus mehreren Zwischenteilen (3, 6) zusammengesetzt ist, wobei zwei Zwischenteile (3, 6) jeweils durch mindestens ein Verbindungsmittel (2, 5, 13, 15), welches in oder auf die Stirnseite der Zwischenteile (3, 6) ein- bzw. aufschiebbar ist, fest miteinander verbunden sind.

2. Stabilisator nach Anspruch 1, **dadurch gekennzeichnet, dass** das Zwischenteil (3) ein hohles Strangpressprofil ist oder mittels des Hohlkörperblasformens ausgeformt ist.

3. Stabilisator nach Anspruch 2, **dadurch gekennzeichnet, dass** mindestens ein Zwischenteil (6) des Stabilisators aus Kunststoff, insbesondere einem Thermoplast oder einem Duroplast ist, welcher insbesondere mittels Kurz-, Lang- oder Endlosfasern und/oder gewickelten Fasern verstärkt ist.

4. Stabilisator nach Anspruch 1 oder 2, **dadurch gekennzeichnet, dass** zumindest ein Zwischenteil (3) des Stabilisators aus Metall ist.

5. Stabilisator nach Anspruch 1 bis 3, **dadurch gekennzeichnet, dass** zumindest ein Zwischenteil (3) des Stabilisators mit einem Metallkern (8) oder Metallrohr (12) verstärkt ist.

6. Stabilisator nach Anspruch 1 bis 5, **dadurch gekennzeichnet, dass** das Zwischenteil (3, 6) an mindestens einem seiner freien Enden an seiner Innen- und/oder Außenwandung mindestens eine Hinterschneidung, einen Rücksprung und/oder eine Verzahnung (7) aufweist, die mit den Verbindungsmitteln (2, 5, 13) zusammenwirkt und insbesondere eine formschlüssige Verbindung bildet.

7. Stabilisator nach einem der vorhergehenden Ansprüche **dadurch gekennzeichnet, dass** die Rücksprünge (7) der Verbindungsmittel (2, 5, 13, 15) Konturen bilden, in die die Zwischenteile (3, 6) einschnappen.

8. Stabilisator nach einem der vorhergehenden Ansprüche, **dadurch gekennzeichnet, dass** die freien Schenkel der Verbindungsmittel (2, 5, 13, 15) einen Winkel zwischen 0° und 90° aufspannen.

9. Stabilisator nach einem der vorhergehenden Ansprüche, **dadurch gekennzeichnet, dass** die Verbindungsmittel (5) s-förmig ausgebildet sind.

10. Stabilisator nach einem der vorhergehenden Ansprüche, **dadurch gekennzeichnet, dass** die Verbindungsmittel (2, 5, 13, 15) nach dem Einsetzen in die Zwischenteile (3, 6) jeweils frei um die Längsachse der Zwischenteile (3, 6) verdrehbar sind.

11. Stabilisator nach einem der vorhergehenden Ansprüche **dadurch gekennzeichnet, dass** das Verbindungsmittel (2, 5, 13, 15) fest mit dem Zwischenteil (3, 6) verbunden, insbesondere verschweißt oder verklebt ist.

12. Stabilisator nach einem der vorhergehenden Ansprüche **dadurch gekennzeichnet, dass** ein Verbindungsmittel (2, 5, 13, 15) vollständig oder größtenteils aus Kunststoff, insbesondere einem Thermoplast oder Duroplast mit insbesondere Faserverstärkung durch Kurz-, Lang- oder Endlosfasern und/oder gewickelten Fasern, gebildet ist.

13. Stabilisator nach einem der vorhergehenden Ansprüche, **dadurch gekennzeichnet, dass** zumindest ein Verbindungsstück (2, 5, 13, 15) einen Metallkern (8) aufweist.

14. Stabilisator nach Anspruch 13, **dadurch gekennzeichnet, dass** der Metallkern (8) eine gezackte Struktur (10) oder mindestens eine Hinterschneidung (11) aufweist und insbesondere vollständig vom Kunststoffaußenmantel umschlossen ist.

15. Stabilisator nach einem der vorhergehenden Ansprüche, **dadurch gekennzeichnet, dass** mindestens ein Verbindungsmittel (2, 5, 13, 15) als Hohlprofil ausgebildet ist.

16. Stabilisator nach Anspruch 15, **dadurch gekennzeichnet, dass** das Hohlprofil durch ein metallisches Rohr (12) verstärkt ist.

17. Stabilisator nach einem der vorhergehenden Ansprüche, **dadurch gekennzeichnet, dass** die Querschnittsfläche des Verbindungsmittels (15) Aussparungen (16) aufweist.

18. Stabilisator nach einem der vorhergehenden Ansprüche, **dadurch gekennzeichnet, dass** das Verbindungsmittel (2, 5, 13, 15) aus Metall ist.

19. Stabilisator nach einem der vorhergehenden Ansprüche, **dadurch gekennzeichnet, dass** das Querschnittprofil durch die Verbindungsmittel (2, 5, 13, 15) rund, elliptisch, polygonförmig oder rechteckig ausgebildet sein kann.

## Claims

1. Anti-roll bar for a motor vehicle, **characterised in that** the anti-roll bar (1) is composed of a plurality of intermediate parts (3, 6), wherein two intermediate parts (3, 6) are in each case firmly connected together by at least one connecting means (2, 5, 13, 15) which can be pushed into or onto the front side of the intermediate parts (3, 6).

2. Anti-roll bar according to Claim 1, **characterised in that** the intermediate part (3) is a hollow extruded profile or is shaped by means of blow moulding.

3. Anti-roll bar according to Claim 2, **characterised in that** at least one intermediate part (6) of the anti-roll bar is made of a plastics material, in particular a thermoplastic or a thermosetting plastic, which is reinforced in particular by means of short, long or continuous fibres and/or wound fibres.

4. Anti-roll bar according to Claim 1 or 2, **characterised in that** at least one intermediate part (3) of the anti-roll bar is made of metal.

5. Anti-roll bar according to Claims 1 to 3, **characterised in that** at least one intermediate part (3) of the anti-roll bar is reinforced by a metal core (8) or a metal tube (12).

6. Anti-roll bar according to Claims 1 to 5, **characterised in that** the intermediate part (3, 6) comprises at least at one of its free ends, at its inner and/or outer wall, at least one undercut, one offset and/or one serrated system (7) which co-operates with the connecting means (2, 5, 13) and in particular forms a positive connection.

7. Anti-roll bar according to any one of the preceding Claims, **characterised in that** the offsets (7) of the connecting means (2, 5, 13, 15) form contours into which the intermediate parts (3, 6) snap.

8. Anti-roll bar according to any one of the preceding Claims, **characterised in that** the free legs of the connecting means (2, 5, 13, 15) span an angle of between 0° and 90°.

9. Anti-roll bar according to any one of the preceding Claims, **characterised in that** the connecting means (5) are s-shaped.

10. Anti-roll bar according to any one of the preceding Claims, **characterised in that** the connecting means (2, 5, 13, 15) can in each case be turned freely about the longitudinal axis of the intermediate parts (3, 6) after being inserted into the intermediate parts (3, 6).

11. Anti-roll bar according to any one of the preceding Claims, **characterised in that** the connecting means (2, 5, 13, 15) are firmly connected to the intermediate part (3, 6), in particular welded or stuck.

12. Anti-roll bar according to any one of the preceding Claims, **characterised in that** one connecting means (2, 5, 13, 15) is formed entirely or for the most part from a plastics material, in particular a thermoplastic or a thermosetting plastic, with in particular fibre reinforcement by means of short, long or continuous fibres and/or wound fibres.

13. Anti-roll bar according to any one of the preceding Claims, **characterised in that** at least one connecting piece (2, 5, 13, 15) comprises a metal core (8).

14. Anti-roll bar according to Claim 13, **characterised in that** the metal core (8) comprises a serrated structure (10) or at least one undercut (11) and is in particular completely encased by the outer plastics shell.

15. Anti-roll bar according to any one of the preceding Claims, **characterised in that** at least one connecting means (2, 5, 13, 15) is formed as a hollow profile.

16. Anti-roll bar according to Claim 15, **characterised in that** the hollow profile is reinforced by a metallic tube (12).

17. Anti-roll bar according to any one of the preceding Claims, **characterised in that** the cross-sectional area of the connecting means (15) comprises recesses (16).

18. Anti-roll bar according to any one of the preceding Claims, **characterised in that** the connecting means (2, 5, 13, 15) is made of metal.

19. Anti-roll bar according to any one of the preceding Claims, **characterised in that** the cross-sectional profile through the connecting means (2, 5, 13, 15) may be round, elliptical, polygonal or rectangular.

## Revendications

1. Barre antiroulis pour un véhicule à moteur, **caractérisée en ce que** la barre antiroulis (1) est constituée de plusieurs parties intermédiaires (3, 6), dans laquelle deux parties intermédiaires (3, 6) sont raccordées l'une à l'autre, respectivement, par au moins un moyen de raccordement (2, 5, 13, 15), qui peut être glissé dans ou sur la face frontale des parties intermédiaires (3, 6) ou en être dégagé.

2. Barre antiroulis selon la revendication 1, **caractérisée en ce que** la partie intermédiaire (3) est un profilé boudiné creux ou est façonnée par soufflage de corps creux.

3. Barre antiroulis selon la revendication 2, **caractérisée en ce qu'**au moins une partie intermédiaire (6) de la barre antiroulis est en matériau plastique, en particulier en un thermoplastique ou un duroplastique qui est en particulier renforcé au moyen de fibres courtes, longues ou sans fin et/ou de fibres enroulées.

4. Barre antiroulis selon la revendication 1 ou 2, **caractérisée en ce qu'**au moins une partie intermédiaire (3) de la barre antiroulis est en métal.

5. Barre antiroulis selon les revendications 1 à 3, **caractérisée en ce qu'**au moins une partie intermédiaire (3) de la barre antiroulis est renforcée par un noyau métallique (8) ou par un tube métallique (12).

6. Barre antiroulis selon les revendications 1 à 5, **caractérisée en ce que** la partie intermédiaire (3, 6) présente sur au moins une de ses extrémités libres, sur sa paroi interne et/ou sa paroi externe, au moins une contre-dépouille, un retrait et/ou une denture (7) qui coopère(nt) avec les moyens de raccordement (2, 5, 13) et forme(nt) en particulier un raccordement mécanique.

7. Barre antiroulis selon l'une quelconque des revendications précédentes, **caractérisée en ce que** les retraits (7) des moyens de raccordement (2, 5, 13, 15) forment des contours dans lesquels les parties intermédiaires (3, 6) s'encliquettent.

8. Barre antiroulis selon l'une quelconque des revendications précédentes, **caractérisée en ce que** les branches libres des moyens de raccordement (2, 5, 13, 15) couvrent un angle entre 0° et 90°.

9. Barre antiroulis selon l'une quelconque des revendications précédentes, **caractérisée en ce que** les moyens de raccordement (5) sont réalisés en forme de S.

10. Barre antiroulis selon l'une quelconque des revendications précédentes, **caractérisée en ce que** l'on peut faire tourner les moyens de raccordement (2, 5, 13, 15) après insertion dans les parties intermédiaires (3, 6), respectivement, librement autour de l'axe longitudinal des parties intermédiaires (3, 6).

11. Barre antiroulis selon l'une quelconque des revendications précédentes, **caractérisée en ce que** le moyen de raccordement (2, 5, 13, 15) est fixé solidement à la partie intermédiaire (3, 6), en particulier par soudage ou par collage.

12. Barre antiroulis selon l'une quelconque des revendications précédentes, **caractérisée en ce qu'**un moyen de raccordement (2, 5, 13, 15) est formé complètement ou en majeure partie de matériau plastique, en particulier d'un thermoplastique ou d'un duroplastique avec en particulier un renforcement par des fibres courtes, longues ou sans fin et/ou des fibres enroulées.

13. Barre antiroulis selon l'une quelconque des revendications précédentes, **caractérisée en ce qu'**au moins un moyen de raccordement (2, 5, 13, 15) présente un noyau métallique (8).

14. Barre antiroulis selon la revendication 13, **caractérisée en ce que** le noyau métallique (8) présente une structure dentelée (10) ou au moins une contre-dépouille (11) et est en particulier complètement entouré par l'enveloppe plastique externe.

15. Barre antiroulis selon l'une quelconque des revendications précédentes, **caractérisée en ce qu'**au moins un moyen de raccordement (2, 5, 13, 15) est réalisé en profilé creux.

16. Barre antiroulis selon la revendication 15, **caractérisée en ce que** le profilé creux est renforcé par un tube métallique (12).

17. Barre antiroulis selon l'une quelconque des revendications précédentes, **caractérisée en ce que** la surface en coupe transversale du moyen de raccordement (15) présente des évidements (16).

18. Barre antiroulis selon l'une quelconque des revendications précédentes, **caractérisée en ce que** le moyen de raccordement (2, 5, 13, 15) est en métal.

19. Barre antiroulis selon l'une quelconque des revendications précédentes **caractérisée en ce que** le profil en coupe transversale à travers les moyens de raccordement (2, 5, 13, 15) peut se présenter sous une forme ronde, elliptique, polygonale ou rectangulaire.
